Europäisches Patentamt

European Patent Office

Office européen des brevets

(11) Numéro de publication : **0 279 760 B1**

(12) # FASCICULE DE BREVET EUROPEEN

(45) Date de publication du fascicule du brevet :
20.03.91 Bulletin 91/12

(51) Int. Cl.⁵ : **A01F 25/20, B23D 49/00**

(21) Numéro de dépôt : **88440006.0**

(22) Date de dépôt : **03.02.88**

(54) **Machine pour le prélèvement de blocs de fourrage dans un silo.**

(30) Priorité : 16.02.87 FR 8702184

(43) Date de publication de la demande :
24.08.88 Bulletin 88/34

(45) Mention de la délivrance du brevet :
20.03.91 Bulletin 91/12

(84) Etats contractants désignés :
DE FR NL

(56) Documents cités :
EP-A- 0 081 447
GB-A- 776 831
US-A- 1 537 980
US-A- 3 016 932

(73) Titulaire : KUHN S.A.
4, Impasse des Fabriques
F-67700 Saverne (FR)

(72) Inventeur : Wattron, Bernard
17, rue des Jardins Haegen
F-67700 Saverne (FR)

(74) Mandataire : Andres, Jean-Claude
KUHN S.A. 4, Impasse des Fabriques
F-67700 Saverne (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à une machine pour le prélèvement de blocs de fourrage dans un silo horizontal, comportant notamment un châssis pourvu à sa partie inférieure de pointes constituant un fond et, à une certaine distance au-dessus de ces pointes, d'un support muni d'un dispositif de coupe déplaçable en vue du découpage de fourrage, lequel dispositif de coupe comprend des couteaux dentés animés durant le découpage.

Avec des machines de ce genre connues dans la demande de brevet EP-A-0.081.447, la coupe de produits tels que l'herbe fortement tassée, est généralement difficile. De ce fait, elles nécessitent une force motrice très importante pour le découpage. Par conséquent, elles ne peuvent être mises en service qu'avec des tracteurs très puissants qui ne sont pas toujours disponibles. De plus, le dispositif de coupe et son support subissent d'importantes contraintes provoquant une rapide usure des différentes pièces.

La présente invention a notamment pour but de faciliter la coupe en vue de remédier aux inconvénients précités et est caractérisée par les éléments de la partie caractérisante de la revendication 1.

A cet effet, une importante caractéristique de l'invention consiste en ce que le dispositif de coupe est pourvu d'au moins un couteau denté fixe qui est sensiblement parallèle aux couteaux animés et qui coopère avec ces derniers pour le découpage de blocs. Les dents dudit couteau fixe constituent des contre-lames qui augmentent l'effet de cisaillement durant la coupe. Ceci favorise la coupe de la matière. De ce fait, la force motrice nécessaire pour l'entraînement du dispositif de coupe et les contraintes qu'il subit sont moins élevées que sur les dispositifs connus.

Le couteau fixe se situe entre deux couteaux animés. De cette manière, il coopère efficacement avec chacun des deux couteaux animés.

Selon une autre caractéristique de l'invention, le couteau fixe possède une épaisseur très faible afin que les dents des deux couteaux animés travaillent pratiquement dans un même plan. Cette épaisseur du couteau fixe est avantageusement inférieure à deux millimètres.

Selon une autre caractéristique de l'invention, le couteau fixe comporte des dents sur ses deux flancs, en vue de faciliter la coupe dans les deux sens de découpage. Le pas des dents du couteau fixe est sensiblement égal à celui des dents des couteaux animés. Cette caractéristique permet de doubler l'effet de cisaillement par rapport aux dispositifs connus.

Selon une autre caractéristique de l'invention, l'extrémité inférieure du couteau fixe comporte sur chaque face un organe destiné au guidage des couteaux animés. Cet agencement permet l'emploi sur chaque dispositif de coupe de deux couteaux animés identiques.

D'autres caractéristiques et avantages de l'invention ressortiront de la description ci-après avec référence aux dessins annexés qui représentent, à titre d'exemple non limitatif, une forme de réalisation selon l'invention.

Dans ces dessins :
- La figure 1 représente une vue de côté d'une machine selon l'invention,
- La figure 2 représente à plus grande échelle et partiellement en coupe, une vue de face du dispositif de coupe,
- La figure 3 représente en coupe partielle une vue de côté du dispositif de coupe,
- La figure 4 représente une coupe transversale des couteaux.

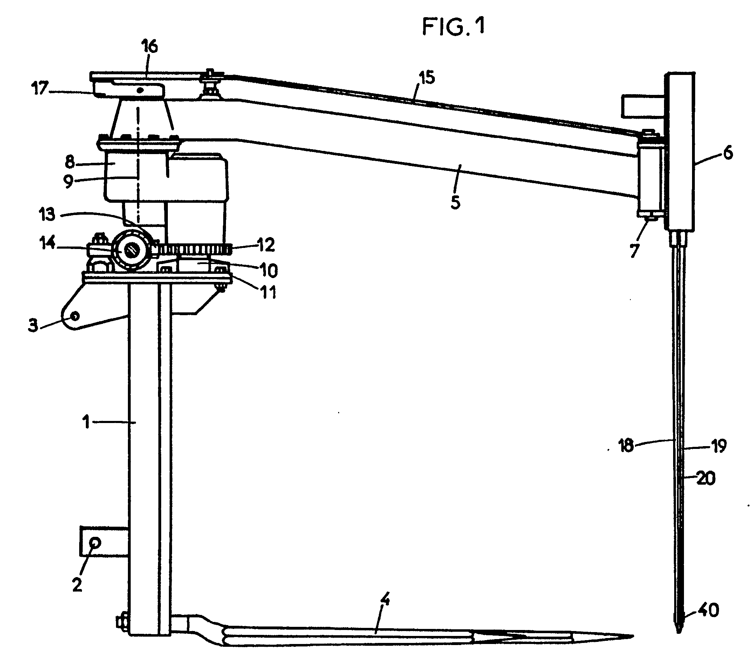

Telle qu'elle est représentée sur la figure 1, la machine selon l'invention comporte un châssis (1) formant un cadre rigide. Ce châssis (1) possède trois points d'accouplement pour l'attelage à un tracteur d'entraînement non représenté. Ces points d'attelage sont constitués par deux tourillons inférieurs (2) et un tourillon supérieur (3). Ledit châssis est également pourvu à sa partie inférieure de plusieurs pointes (4) qui s'étendent dans un plan sensiblement horizontal. A une certaine distance au-dessus de ces pointes (4) est prévu un bras support (5) portant à son extrémité extérieure un dispositif de coupe (6). Celui-ci est articulé sur ledit bras au moyen d'un axe sensiblement vertical (7).

Le bras support (5) du dispositif de coupe (6) est articulé dans un boîtier (8) au moyen d'un axe sensiblement vertical dont seul l'axe géométrique (9) est représenté sur la figure 1. Ce boîtier (8) est lui-même articulé sur un axe sensiblement vertical (10) qui est fixé sur une plaque (11) solidaire du châssis (1). A la base du boîtier (8) est prévue une couronne dentée (12) qui engrène avec une crémaillère (13) fixée sur le corps d'un vérin hydraulique (14) à double tige solidaire du châssis (1). Dans ledit boîtier (8) chacun des deux axes précités porte une roue dentée. Ces deux roues communiquent entre elles au moyen d'une roue dentée intermédiaire également logée dans le boîtier (8).

Le déplacement de la tête de coupe (6) en vue du découpage d'un bloc est obtenu en faisant se déplacer longitudinalement le corps du vérin (14) et la crémaillère (13). Celle-ci fait alors tourner le boîtier (8) autour de l'axe (10), lequel boîtier déplace à son tour le bras support (5). Ce déplacement du bras support (5) s'opère dans la direction opposée à celle du boîtier (8) en raison de l'agencement des roues dentées précitées. En sus, la vitesse de rotation du bras support (5) sur son axe d'articulation avec le boîtier (8) est égale à quatre tiers de la vitesse de rotation dudit boîtier sur son axe (10). Cet agencement permet de déplacer le dispositif de coupe (6) suivant une trajectoire en forme de U en vue du découpage de blocs sensiblement rectangulaires.

Durant ledit découpage, le dispositif de coupe (6) est orienté autour de l'axe d'articulation (7) avec le bras support (5) afin de le maintenir constamment tangent à sa trajectoire. Cette orientation est assurée au moyen d'une tringle (15) articulée sur le dispositif de coupe (6) et reliée à une seconde tringle (16) qui est commandée par une manivelle (17) reliée au boîtier support (8) par un axe traversant l'axe d'articulation du bras support (5).

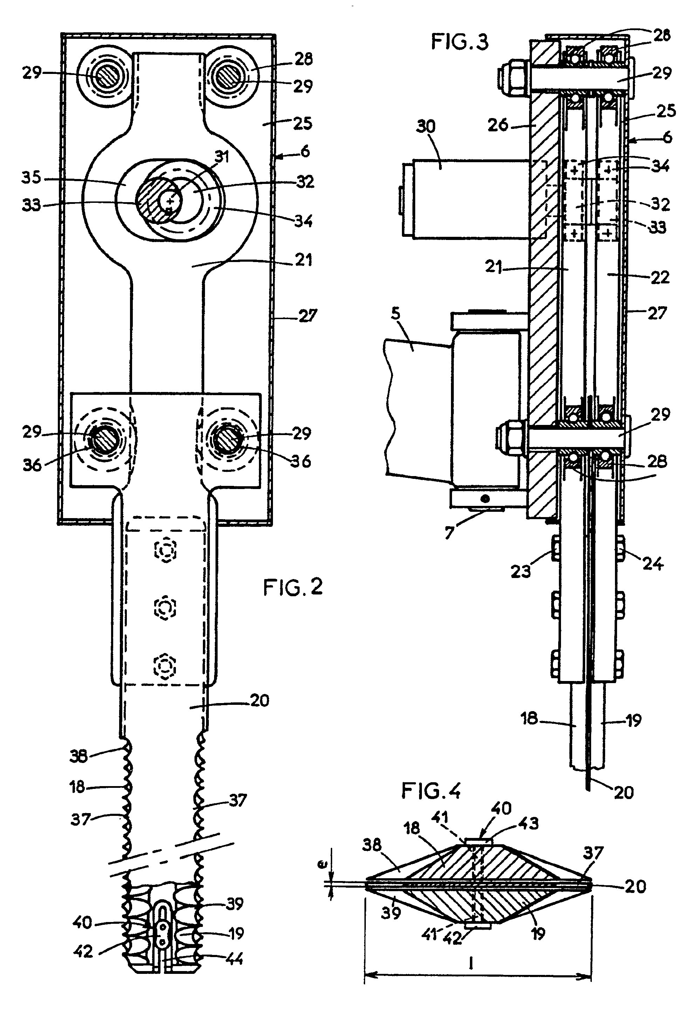

Comme cela ressort des figures 2 à 4, le dispositif de coupe (6) comporte deux couteaux dentés animés (18 et 19) qui s'étendent vers le bas pratiquement jusqu'au niveau des pointes (4) du châssis (1) et un couteau denté fixe (20) sensiblement parallèle auxdits couteaux animés (18, 19). Ces couteaux animés (18, 19) sont fixés sur des coulisseaux (21, 22) au moyen de vis (23 et 24). Les coulisseaux (21 et 22) s'étendent en grande partie dans un boîtier (25) formé par une plaque de fond (26) articulée sur le bras support (5) au moyen de l'axe d'articulation (7) comme décrit précédemment, et d'un couvercle (27). Dans ce boîtier (25) sont prévus des galets (28) pour le guidage des coulisseaux (21 et 22). Ces galets (28) sont montés sur des axes de serrage (29) et se situent de part et d'autre des coulisseaux (21 et 22). La plaque de fond (26) porte en sus un moteur hydraulique (30) pour entraîner en des mouvements rectilignes alternatifs les couteaux (18 et 19). A cet effet, l'axe (31) du moteur (30) est muni de deux excentriques (32 et 33) actionnant chacun un des coulisseaux (21, 22). Pour cela, chaque excentrique (32, 33) porte un roulement à billes (34) qui est engagé dans un orifice de forme oblongue (35) prévu dans chaque coulisseau (21, 22) (voir figures 2 et 3).

Le couteau denté fixe (20) s'étend jusque dans le boîtier (25) et y est fixé sur les deux axes de serrage (29) inférieurs. On voit sur la figure 2 que l'extrémité du couteau fixe (20) qui se situe dans le boîtier (25) est élargie et comporte deux trous de passage (36) pour les axes de serrage (29).

Dans le mode de réalisation représenté, le couteau denté fixe (20) se situe entre les deux couteaux animés (18 et 19). Dans ce cas, la largeur (1) du couteau fixe (20) est sensiblement égale à celle des couteaux animés (18 et 19) et son épaisseur (e) est très faible. Cette épaisseur (e) peut être de l'ordre de deux millimètres ou même inférieure à deux millimètres, selon la rigidité de la matière utilisée.

Il est aussi possible de prévoir autant de couteaux fixes (20) que de couteaux animés (18 et 19) ou même un couteau fixe (20) de part et d'autre de chaque couteau animé (18 ou 19), pour augmenter davantage l'effet de cisaillement.

Il ressort également des figures 2 et 4 que le couteau fixe (20) comporte des dents (37) sur ses deux flancs. De cette manière, il coopère au découpage aussi bien de la gauche vers la droite qu'inversement de la droite vers la gauche. Le pas de ces dents (37) est sensiblement égal au pas des dents (38 et 39) des couteaux animés (18 et 19). Le nombre de croisements entre les arêtes des dents (37) du couteau fixe (20) et les arêtes des dents (38 et 39) des couteaux animés (18 et 19) est doublé par rapport au nombre de croisements existant sur un dispositif sans couteau fixe (20). L'effet de cisaillement ainsi obtenu convient parfaitement pour le découpage de la plupart des matières ensilées. Pour la coupe de matière particulièrement résistante, on peut utiliser des couteaux fixes comportant des dents avec un pas inférieur à celui des dents des couteaux animés, afin d'augmenter davantage l'effet de cisaillement. A l'inverse, dans des conditions de coupe plus faciles, on peut aussi utiliser des couteaux fixes sur lesquels le pas des dents est supérieur à celui des dents des couteaux animés.

Il ressort par ailleurs des figures 2 et 4 que l'extrémité inférieure du couteau fixe (20) comporte des organes de guidage (40) des couteaux mobiles (18, 19). Lesdits organes sont constitués par des axes (41) s'étendant de part et d'autre du couteau fixe (20) et portant des arrêts (42 et 43) à leurs extrémités. Chaque couteau animé (18, 19) comporte une même ouverture oblongue (44) pour le passage desdits axes (41). Ces couteaux animés (18, 19) peuvent ainsi se déplacer verticalement par rapport au couteau fixe (20), tout en étant reliés à ce dernier. Cette liaison permet de maintenir les couteaux (18, 19 et 20) rapprochés de manière à favoriser la coupe.

Il est bien évident que l'on pourra encore apporter à l'exemple de réalisation décrit ci-dessus divers perfectionnements, modifications ou additions ou remplacer certains éléments par des éléments équivalents sans pour autant sortir du cadre de la présente invention.

## Revendications

1. Machine pour le prélèvement de blocs de fourrage dans un silo sensiblement horizontal, comportant notamment un châssis (1) pourvu à sa partie inférieure de pointes (4) constituant un fond et, à une certaine distance au-dessus de ces pointes, d'un support muni d'un dispositif de coupe déplaçable (6) en vue du découpage du fourrage, lequel dispositif de coupe comprend des couteaux dentés qui sont animés durant le découpage (18, 19), caractérisée par le fait que le dispositif de coupe (6) est pourvu d'au moins un couteau denté fixe (20), le ou les couteaux dentés fixes (20) étant situés entre deux couteaux animés (18 et 19) de manière à augmenter l'effet de cisaillement durant la coupe.

2. Machine selon la revendication 1, caractérisée par le fait que la largeur (1) du couteau fixe (20) est sensiblement égale à la largeur des couteaux animés (18 et 19).

3. Machine selon la revendication 1 ou 2, caractérisée par le fait que l'épaisseur (e) du couteau fixe (20) est très faible.

4. Machine selon l'une quelconque des revendications 1 à 3, caractérisée par le fait que le couteau fixe (20) comporte des dents (37) sur ses deux flancs.

5. Machine selon la revendication 4, caractérisée par le fait que le pas des dents (37) du couteau fixe (20) est sensiblement égal au pas des dents (38 et 39) des couteaux animés (18 et 19).

6. Machine selon l'une quelconque des revendications précédentes, caractérisée par le fait que l'extrémité inférieure du couteau fixe (20) comporte des organes de guidage (40) coopérant avec les couteaux animés (18 et 19).

## Ansprüche

1. Maschine zur Entnahme von Futterblöcken aus einem annähernd horizontalen Silo, die besonders einen Rahmen (1) aufweist, an dessen unterem Teil Zinken (4), die einen Boden bilden, und, in gewissem Abstand oberhalb dieser Zinken, ein Träger, angeordnet sind, wobei der Träger eine Schneidvorrichtung (6) besitzt, die zwecks Ausschneiden des Futters versetzbar ist, welche Schneidvorrichtung gezahnte Messer aufweist (18, 19), die beim Ausschneiden angetrieben sind, dadurch gekennzeichnet, dass die Schneidvorrichtung (6) mit mindestens einem starren gezahnten Messer (20) versehen ist, wobei das oder die starren gezahnten Messer (20) sich zwischen zwei angetriebenen Messern (18 und 19) befinden um den Schereffekt während dem Ausschneiden zu erhöhen.

2. Maschine nach Anspruch 1, dadurch gekennzeichnet, dass die Breite (1) des starren Messers (20) annähernd gleich der Breite der angetriebenen Messer (18 und 19) ist.

3. Maschine nach Anspruch 1 oder 2, dadurch gekennzeichnet, dass die Dicke (e) des starren Messers (20) sehr gering ist.

4. Maschine nach irgend einem des Ansprüche 1 bis 3, dadurch gekennzeichnet, dass das starre Messer (20) Zähne (37) auf seinen beiden Flanken besitzt.

5. Maschine nach Anspruch 4, dadurch gekennzeichnet, dass die Teilung der Zähne (37) des starren Messers (20) annähernd gleich der Teilung der Zähne (38 und 39) der angetriebenen Messer (18 und 19) ist.

6. Maschine nach irgend einem der vorherstehenden Ansprüche, dadurch gekennzeichnet, dass das untere Ende des starren Messers (20) Führungsmitteln (40) aufweist, die mit den angetriebenen Messern (18 und 19) kooperieren.

## Claims

1. Machine for cutting off blocks of fodder in an approximately horizontal silo, comprising in particular a chassis (1) which is provided at its lower end with spikes (4) constituting a bottom and, at a certain distance above this spikes, a support on which is mounted a movable cutting device (6) in order to cut the fodder, said cutting device comprising toothed knives which are driven during the cutting (18, 19), characterized in that the cutting device (6) comprises at least one fixed toothed knife (20), said fixed toothed knife or knives (20) being located between two driven knives (18 and 19) in order to increase the shearing action during the cutting.

2. Machine according to Claim 1, characterized in that the width (1) of the fixed knife (20) is approximately equal to the width of the driven knives (18 and 19).

3. Machine according to Claim 1 or 2, characterized in that the thickness (e) of the fixed knife (20) is very weak.

4. Machine according to any one of Claims 1 to 3, characterized in that the fixed knife (20) comprises teeth (37) on its two sides.

5. Machine according to Claim 4, characterized in that the pitch of the teeth (37) of the fixed knife (20) is approximately equal to the pitch of the teeth (38 and 39) of the driven knives (18 and 19).

6. Machine according to any one of the preceding Claims, characterized in that the lower end of the fixed knive (20) comprises guide members (40) which cooperate with the driven knives (18 and 19).

FIG.1

EP 0 279 760 B1

FIG.3

FIG.2

FIG.4